Europäisches Patentamt

European Patent Office

Office européen des brevets

(11) Publication number: **0 474 762 B1**

## EUROPEAN PATENT SPECIFICATION

(45) Date of publication of patent specification: **20.04.94**  (51) Int. Cl.5: **H04N 5/217**

(21) Application number: **90909234.8**

(22) Date of filing: **24.05.90**

(86) International application number:
**PCT/US90/02924**

(87) International publication number:
**WO 90/15501 (13.12.90 90/28)**

(54) **METHOD AND APPARATUS FOR CORRECTING SHADING EFFECTS IN VIDEO IMAGES.**

(30) Priority: **30.05.89 US 358284**
**30.05.89 US 358286**

(43) Date of publication of application:
**18.03.92 Bulletin 92/12**

(45) Publication of the grant of the patent:
**20.04.94 Bulletin 94/16**

(84) Designated Contracting States:
**DE GB**

(56) References cited:
**US-A- 4 392 157**
**US-A- 4 783 836**

**PATENT ABSTRACTS OF JAPAN, vol. 13, no. 338 (E-795)(3686), 28 July 1989, & JP A 199372 (FUJI PHOTO FILM CO. LTD.) 18 April 1989**

(73) Proprietor: **EASTMAN KODAK COMPANY**
**343 State Street**
**Rochester, New York 14650-2201(US)**

(72) Inventor: **VOGEL, Richard, Martin**
**141 Woodleaf**
**Pittsford, NY 14534(US)**

(74) Representative: **Schmidt, Peter, Dipl.-Ing. et al**
**KODAK Aktiengesellschaft**
**Patentabteilung**
**D-70323 Stuttgart (DE)**

Rank Xerox (UK) Business Services
(3.10/3.09/3.3.3)

## Description

The present invention relates to document retrieval systems in general which capture an image of a document in electronic form using linear CCD imagers or a CCD array, and more specifically, defining the two-dimensional, non-uniformity characteristics of this system in terms of two orthogonal correction functions stored in separate memories, thereby reducing the total size of the memory required to store the shading correction information.

Document retrieval systems typically apply sophisticated processing algorithms to a document which has been captured in digital form. For example, some algorithms may involve thresholding of the data to remove background areas of the document or generation of histograms for exposure control. Any non-uniformity in the retrieval system will effect the captured data and may result in false decisions by these processing algorithms.

One well known and well defined source of non-uniformity can be introduced by using a lens to focus the image onto the image capture device. The resulting non-uniformity is characterized by the "$\cos^4$" law which is well known in the optical art.

Complex lenses which may consist of multiple lens elements, apertures, etc. may not directly obey the above-mentioned law but will have a characteristic that is repeatable from lens to lens during the manufacturing process.

Non-uniformities which are not well defined may arise from other sources also. Some examples are: CCD pixel sensitivity variation which may on the order of 5-10% and spot uniformities that may occur in an illumination source such as by a lamp filament.

Many methods have been previously disclosed which correct for the combined effects of illumination system non-uniformity and CCD pixel sensitivity variation.

In US Patent No. US-A-4,392,157, granted in the name of Garcia et al discloses a technique whereby a two-dimensional scan region is divided into groups of pixels. Those groups which have responses that deviate more than a certain amount from a mean value will be corrected. The location of the groups to be corrected is encoded as a distance from the last group which was corrected. This method conserves memory space but the overall correction may be somewhat course if the memory is small. Conversely, the memory requirement will become large as finer correction resolution is applied.

US Patent No. US-A-4,343,021, in the name of Frame discloses a technique whereby the two-dimensional scan area is again divided into an arbitrary number of elements. A correction factor is determined for each element during a calibration scan and used to correct the response of each group during the subsequent scans. This method again suffers from a memory requirement that grows as the correction resolution increases.

US Patent US-A-3,902,011, to Pieters et al discloses a technique whereby a number of spaced apart points in the two-dimensional scan area are sampled. A correction factor is determined for each point. During subsequent scans, the correction factors are used in conjunction with interpolation to arrive at a better correction factor for each pixel. Interpolation gives a better correction than that disclosed by Frame for a given memory size. If a better correction factor is required for the actual non-uniformity, then the memory size again could become very large.

The prior art as exemplified by the aforementioned three patents has illustrated various techniques that attempt to reduce the amount of memory required for storing correction factors. These techniques all suffer from the fact that the number of required memory locations increases as the square of the linear resolution. For example, a system with a resolution of 10 elements along both the X and Y scan directions would required 100 memory locations (10 X 10). If the X and Y scan resolutions were doubled to 20 elements, the memory requirement would increase to 400 locations (20 X 20), a four-fold increase! If the X and Y scan resolutions were again doubled to 40 elements, the memory requirement would increase to 1600 locations (40 X 40), a sixteen-fold increase!

The present invention overcomes the requirement that the number of memory locations increases as the square of the linear resolution. This is accomplished by defining the two-dimensional non-uniformity characteristics in terms of two functions which are orthogonal. The orthogonal correction functions are then determined and stored in separate memories.

During a scan, a pixel counter addresses the X memory while a line counter addresses the Y memory. The correction factors thus obtained are applied sequentially to correct the pixel data value at the current X and Y coordinates. Data may be in linear or logarithmic form and correction factors may be applied as a multiplier or offset respectively.

Figure 1 is a functional block diagram illustrating a preferred embodiment of the present invention;

Figure 2 is a graph of PROM output versus PROM address input for logarithmic conversion;

Figure 3 is a graph of a PROM output versus PROM address input for exponential conversion;

Figure 4 is a graph of the input level versus the required log offset to restore the input level to full value;

Figure 5 is a diagram showing the combined error effect of logarithmic and exponential conversion processes;

Figure 6 is a timing chart showing the operating timing sequences of the present invention;

Figure 7 is a functional block diagram for a preferred embodiment of the present invention for use with multiple lenses;

Figure 8 illustrates how a two dimensional lens fall-off correctional information may be a function of separate orthogonal X and Y fall-off functions; and

Figure 9 is a functional block diagram for a second embodiment of the present invention where the correction circuit has the capability of learning the nonuniformity characteristics.

In the present description of the invention it has been assumed that the effects of dark current signals have been previously removed. A number of techniques are known in the prior art for this purpose and will not be discussed at this time.

Also not considered is the absolute control of illumination level and once again many techniques are available in the art for exposure control in conjunction with a charge coupled device (CCD) image scanner.

The nonuniformity reduction technique disclosed herein is independent of the absolute exposure level and will not interfere with external exposure control algorithms like some automatic gain control (AGC) type correction techniques.

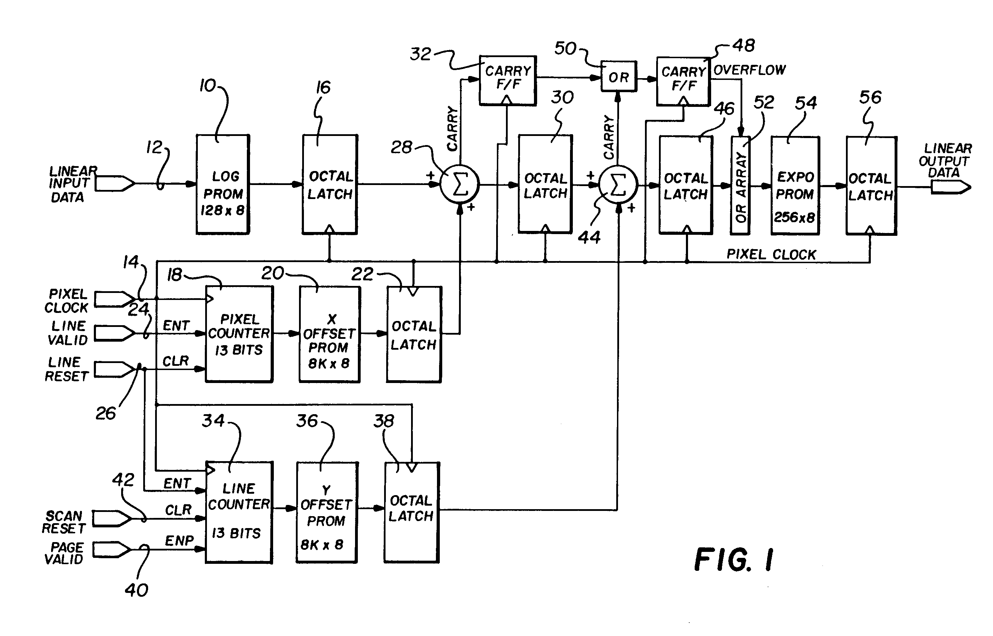

With reference to Fig. 1, a functional block diagram for a preferred embodiment of the present invention is shown. Bit resolution of the various counters and programmable read only memories (PROMs) are specified and sized appropriately for use with a linear scanner having a resolution of 4800 elements in both the horizontal (X) and vertical (Y) directions.

Various PROMs are discussed in conjunction with the present invention. It should be understood that the data stored in each of these PROM's has been determined on the use of a particular optical system and a specific CCD image scanner or two dimensional array.

Input data from the image capture device is converted to logarithmic form by Log PROM 10. Input data is inputted on line 12 to Log PROM 10 each cycle of the pixel clock which appears on line 14. The pixel clock operates at a rate of approximately 8 MHz. The result of each logarithmic conversion outputted from log PROM 10 is loaded into octal latch 16 on the next pixel clock cycle.

Concurrently, with the arrival of each new input pixel data the pixel counter 18 is incremented. The output of pixel counter 18 is used to address a new memory location in the X offset PROM 20. Each addressed memory location in offset PROM 20 contains an offset value which, when added to the incoming pixel data value, will compensate for both the sensitivity variation of the linear scanner at that pixel location as well as the X component of the optical system illumination nonuniformity associated with that pixel location. The X offset value from PROM 20 is loaded into octal latch 22 on the next pixel clock cycle.

The pixel counter 18 is only allowed to increment when valid data samples are available because there may be more pixel clock cycles than data during any given scan line. This allows conservation of memory. The line valid signal on line 24 functions to enable pixel counter 18 only when valid data samples are available. A Line Reset signal is applied to synchronously clear pixel counter 18 via line 26 at the end of each scan line.

The pixel data from latch 16 and its corresponding correction offset value from latch 22 are simultaneously inputted to 8 bit adder 28. The result of the combination is then loaded into octal latch 30 during the next pixel clock cycle.

If an overflow occurs in adder 28, it will cause carry flip-flop 32 to be set simultaneously with the data loaded into latch 30.

A line counter 34 is incremented each time pixel counter 18 is reset. Line counter 34 outputs are used to address memory locations in the Y offset PROM 36. The appropriate memory location contains an offset value which, when added to the incoming pixel data, will correct for the Y component of the optical system illumination nonuniformity at that pixel. The Y offset value from PROM 36 is loaded into octal latch 38 during the next pixel clock cycle.

Line counter 34 is only allowed to increment when a document is being scanned. The Page Valid signal on line 40 enables line counter 34. The Scan Reset signal on line 42 is applied to synchronously clear line counter 34 at the end of each line scan.

The data from octal latch 30 and the corresponding Y correction offset value from octal latch 38 are simultaneously inputted to 8 bit adder 44. The result of this combination is loaded in octal latch 46 during the next clock cycle.

If an overflow occurs in adder 44 it would result in the carry flip-flop 48 to be set simultaneously with the data loaded into latch 46. Double input OR gate 50 allows flip-flop 48 to be set also in the event an overflow occurred on an earlier correction.

The corrected data in log format present in octal latch 46 is sent to an octal two-input OR array 52 where the 8 bits can be forced to logic 1 if an overflow occurred during the correction process. If this operation were not performed, the resulting data would appear as near-black points when they are, in fact, "whiter-than-white".

Expo PROM 54 converts the data from logarithmic format to a linear format. The result of the conversion is loaded into octal latch 56 during the next cycle of the pixel clock.

The use of clocked octal latches 16, 22, 30, 38, 46, and 56 and clocked carry flip-flops 32 and 48 allows digital processing to take place synchronously with the pixel clock while running at very high speeds. Such a technique is called "pipelining" and is well known in digital signal processing.

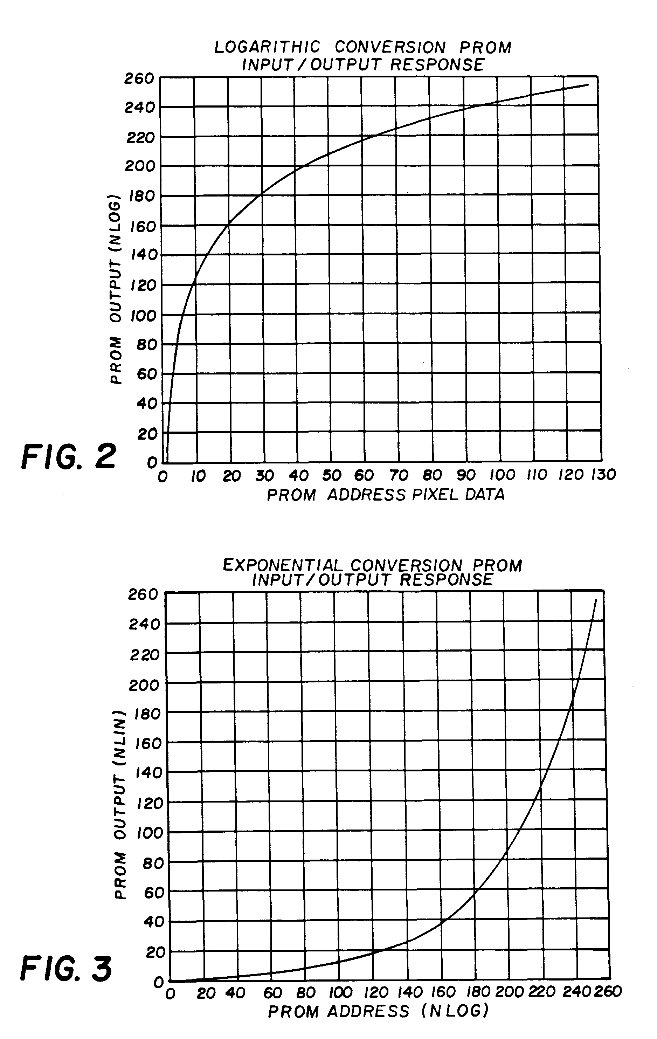

Figure 2 illustrates the input/output response for the log conversion PROM 10 shown in Fig. 1. Digital output data from the image capture device is applied as an address to PROM 10. The input/output response of PROM 10 is described by the following equation:

$$*Nlog = (2^N-1) [LN(pixel\ data)/2^M-1) + YG] /YG$$

where:

LN = Natural logarithm function

Y = Conversion factor between the base-ten and natural logarithm functions $Y = LN (10)$.

G = A factor which specifies the dynamic range available in the PROM 10 input signal.

M = Image capture device A/D converter resolution in bits.

N = Logarithmic conversion PROM output resolution in bits.

$0 \leq Nlog \leq 2^N-1$

$0 \leq pixel\ data \leq 2^M-1$

since LN(0) is not defined...let $LN(0) = LN[1/(2^M-1)]$

If the A/D converter is the dynamic range limiter then

$G = (6M + 1.8)/20$

otherwise G equals the dynamic range at the A/D converter input divided by 20.

For example, if the dynamic range of the signal at the A/D input is 60db and the A/D resolution is 7 bits then the A/D converter is clearly the dynamic range limiter since its signal-to-quantization noise level is

$(6) X (7) + 1.8 = 43.8db$

In this case

$G = (6) X (7) + 1.8)/20 = 2.19$

However, if the dynamic range of the signal at the input to the same A/D converter were only 30db then the A/D converter would no longer be the dynamic range limiter and

$G = 30/20 = 1.5$

This method of selecting G allows the full resolution of the logarithmic conversion PROM 10 to be applied to the dynamic range of the PROM input signal.

Figure 3 illustrates the input/output response of the exponential conversion PROM 54 shown in Figure 1. Its function is to convert the corrected data in logarithmic form back to data in linear form as may be required by subsequent processing algorithms. The input/output response is characterized by the following equation:

$$*Nlin = (2^L-1) EXP [YG\ Nlog/(2^N-1) - YG]$$

where

$0 \leq Nlin \leq 2^L-1$

EXP = Exponential function which is the inverse of the natural logarithm function.

L = Exponential conversion PROM 54 output resolution in bits.

M N Nlog Y and G are as discussed in conjunction with Figure 1 and its equation.

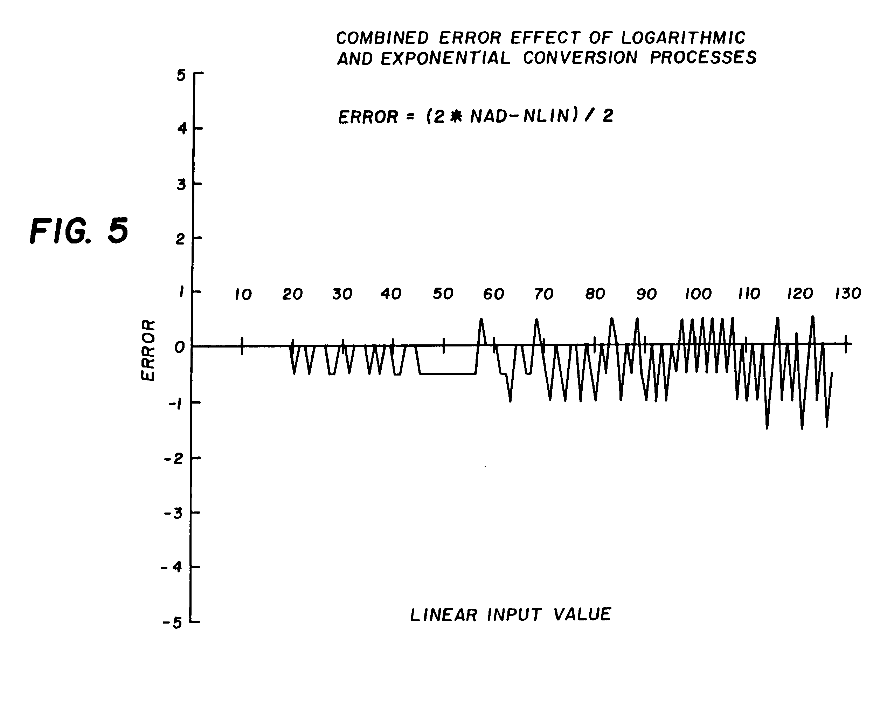

Figure 5 illustrates the offset value required to restore the input level to full scale as a function of the input level.

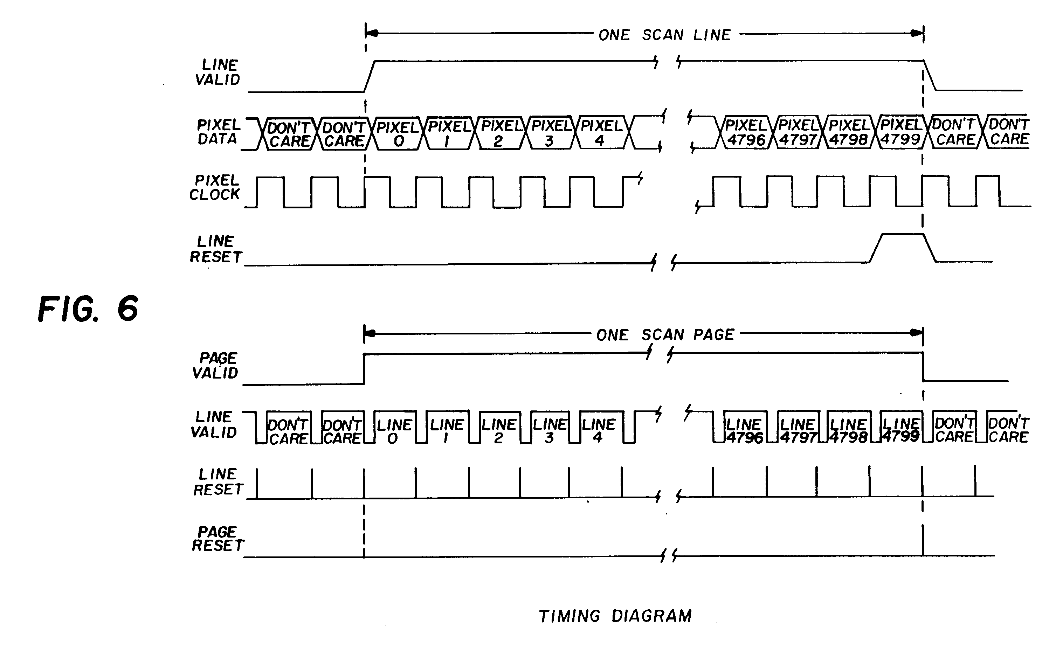

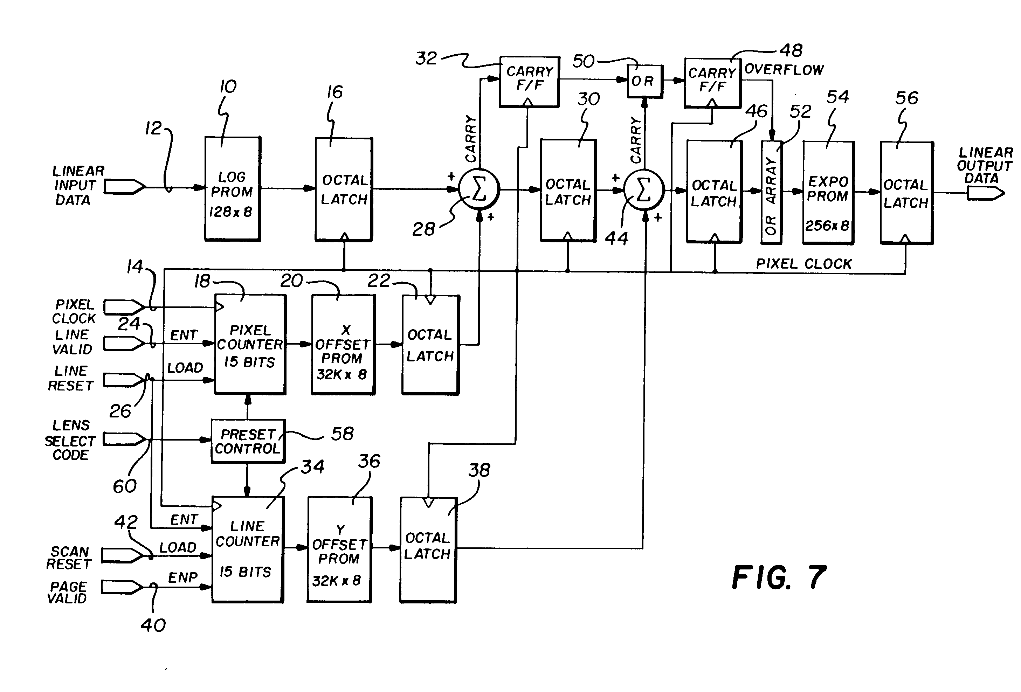

Figure 6 illustrates the relationship of the various timing signals used in conjunction with the preferred embodiment shown in Figure 1. These signals are discussed in the description of Figure 1 and later in Figure 7.

Figure 7 illustrates how the system shown in Figure 1 could be modified to function with multiple lenses. The operation is the same as that described in Figure 1 with the following exceptions. Operation with six lenses is assumed for the sake of discussion.

In the earlier description, the pixel counter 18 and line counter 34 were cleared at the end of each scan line or scan respectively. With multiple lenses, a predetermined count is loaded into each counter with the count representing the starting address of the block of memory containing the correct offsets for the lens selected.

For example, a 3 bit lens select code appearing on line 60 instructs the preset control logic 58 which lens is being used. Preset control logic 58 then determines the proper preset value to be loaded into each counter 18 and 34.

For a six lens system, 28.8k bytes of memory (4.8k x 6 lenses) would be required for each correction offset PROM 20 and 36 for the X and Y offsets respectively. If the next size memory 32K were to be used, the resolution of each counter 18 and 34 could be increased to 15 bits so as to accommodate the increased address length.

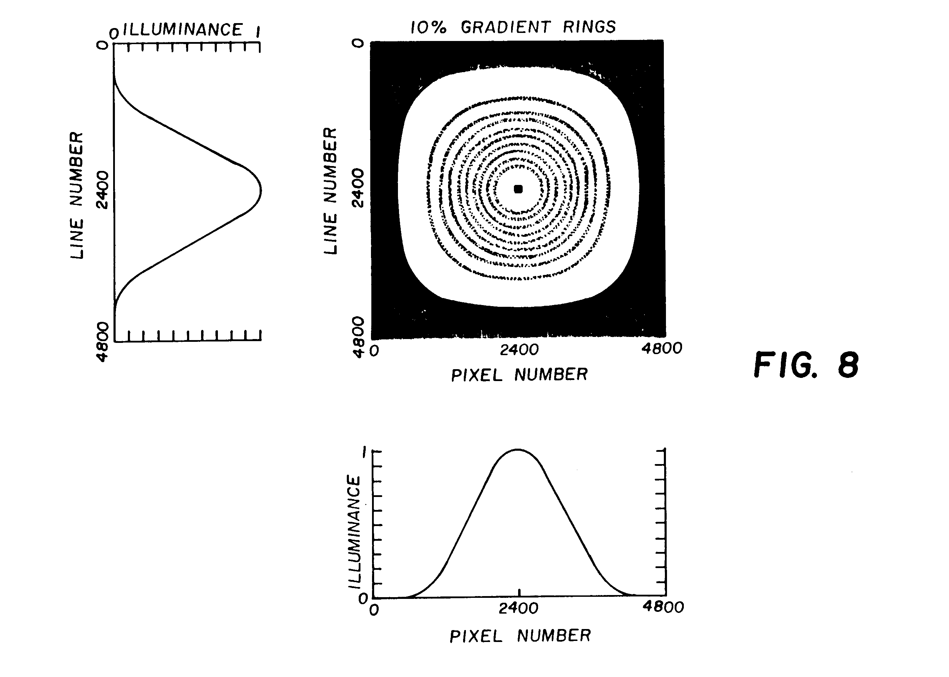

Figure 8 illustrates in a very simple example, a two-dimensional lens fall-off as a function of separate orthogonal X and Y fall-off functions.

In terms of a cartesian co-ordinate system, the illumination at a particular location (X,Y) could be

* The end result of the calculations is rounded to the nearest integer.

described by:

$$I(X,Y) = I(X) \times I(Y)$$

where $I(X,Y)$ is the normalized illumination at location $(X,Y)$ and $I(X)$ and $I(Y)$ are the normalized fall-off functions along the lines Y2400 and X2400 respectively in Figure 8. Along the lines Y2400, the function $I(X)$ is at its maximum and along line the function $I(Y)$ is at its maximum.

Because the fall-off functions are known, the reciprocal functions can be calculated $g(X)$ and $g(Y)$ such that:

$$g(X) \times I(X,2400) = 1$$
$$g(Y) \times I(2400,Y) = 1$$

Once these reciprocal functions are known, they can be used to correct the normalized data value at a given location as follows:

$$D(X,Y) = \text{pixel data}(X,Y) \times g(X) \times g(Y)$$

We can further define the normalized illumination function in logarithmic form as follows:

$$I'(X,Y) = I'(X) + I'(Y)$$

where

$$I'(X,Y) = Ln[I(X,Y)]$$
$$I'(X) = Ln[I(X,Y)]$$
$$I'(Y) = Ln[I(Y)]$$

Normalized logarithmic correction functions $g'(x)$ and $g'(Y)$ can then be determined as follows:

$$g'(X) + I'(X,2400) = 0$$
$$g'(Y) + I'(2400,Y) = 0$$

The correct normalized data value at a given location may then be found as follows:

$$D(X,Y) = e\{Ln[\text{pixel data }(X,Y)] + g'(X) + g'(Y)\}$$

The correction functions $g'(X)$ and $g'(Y)$ are scaled by the factor $(2^N-1)$ and stored in PROMs 20 and 36 respectively in Figures 1 and 7.

Calculation of the correction functions along the lines X2400 and Y2400 results in the best signal-to-noise since the function orthogonal to the correction function being calculated is at its maximum.

Although the preferred embodiment has demonstrated a system with fixed calibration or multiple selectable fixed calibrations, it should be understood that the technique of using orthogonal correction functions to conserve memory is not restricted to this application alone.

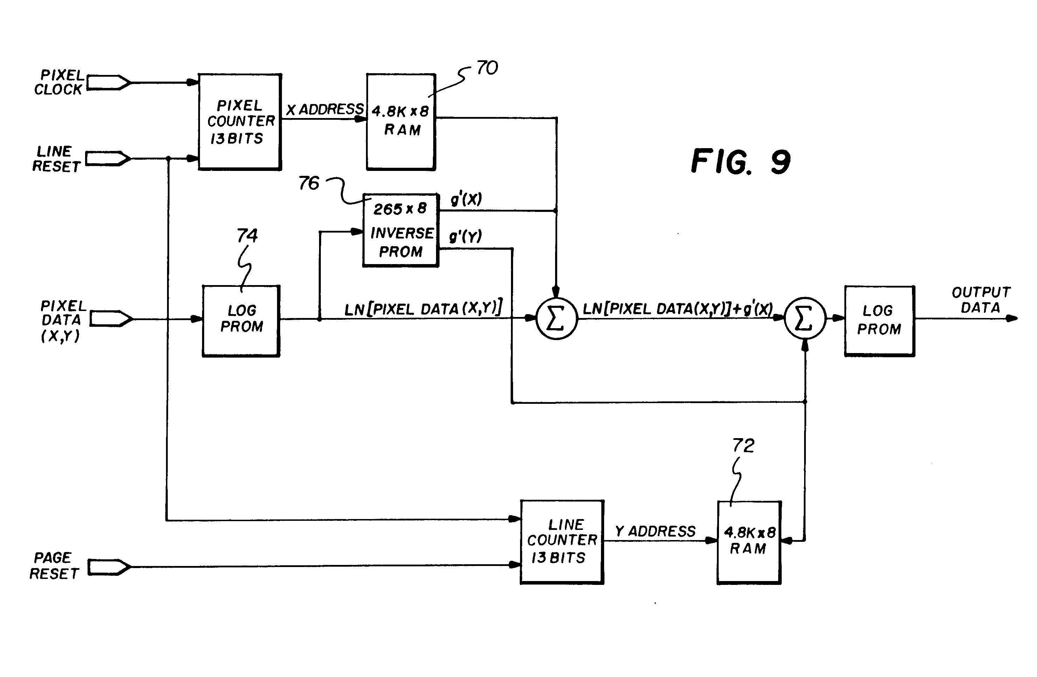

Those skilled in the art could apply this technique to any type of two-dimensional photo-electronic image capture device. A second embodiment (Fig. 9) gives another example of how this technique might be applied.

Assuming an image scanning apparatus as previously discussed in conjunction with Figures 1 and 7. A functional block diagram is shown in Figure 9 for the second embodiment. This diagram has been simplified and it should be understood that Figure 9 would include the data latches, flip-flops and timing signals as shown in Figures 1 and 7 to make it fully functional.

This system differs from that in Figures 1 and 7 in that RAMs 70 and 72 are used instead of PROMs to store the correction functions. Alternatively, an electrically erasable PROM could also be used instead of RAMs 70 and 72. Unlike the systems shown in Figures 1 and 7, the system shown in Figure 9 is capable of "learning" the system nonuniformity characteristic and therefore requires a calibration scan.

Operation is as follows. Prior to a calibration scan the scan area is illuminated with a uniform field of light at a level which would cause maximum exposure on the image capture device. However, due to sources of nonuniformity as previously discussed, the response of the photo-electronic scanning device will not be uniform across the two-dimensional scan area.

During a scan, pixel data along the line X = 2400 (Fig. 8) are used to determine the correction function $g'(Y)$. Along this line the X component of the illumination should be at its maximum and the best signal-to-noise will be achieved.

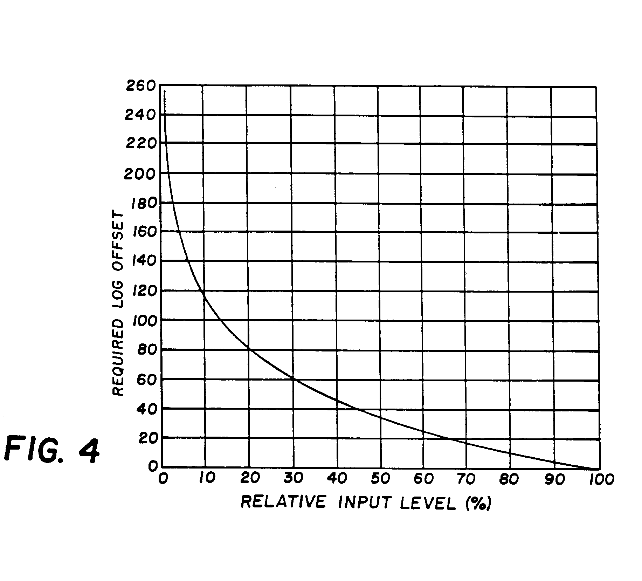

Pixel data at locations (2400,Y) are converted to log format by log PROM 74. Inverse PROM 76 determines the required log offset $g'(Y)$ to restore the data value to full scale. The response of this PROM is as discussed in conjunction with Figure 4. The correction values are then stored in Y offset memory 36 (Fig. 1) for use in subsequent scans.

During the course of the calibration scan line Y = 2400 (Fig. 8) will be reached. Along line Y = 2400 the Y component of the illumination should be at its maximum. Pixel data at locations (X,2400) are then converted to log format by log PROM 24. Inverse PROM 76 determines the required log offset $g'(X)$ to restore the data values to full scale. These correction values are then stored in X offset memory 20 (Fig. 1) for use in subsequent scans.

The size of the memory required to store correction information is substantially reduced by using orthogonal correction functions. In addition, the correction technique associated with the present invention requires no periodic calibration scan. Product reliability is enhanced because the correction data is not prone to corruption.

Stored correction factors may be in the form of a multiplier to be applied to data in linear form using conventional multiplier integrated circuits. Correction factors may also be in the form of an offset to be applied to data in logarithmic form using conventional adders. In any event, the correction can be applied in the system at a real time rate.

## Claims

1. An apparatus for compensating for two-dimensional non-uniformities in an optical system at each pixel location along a scan line characterized by:

   means for establishing multibit correctional data by determining the two-dimensional non-uniformity characteristics in terms of two orthogonal functions extending along two orthogonal axes;

   means for storing correctional factors for a first orthogonal axis;

   means for storing correctional factors for a second orthogonal axis;

   means for accessing said stored correctional factors according to the coordinates of the pixel being processed; and

   means for combining the correction factors to obtain a corrected value for the pixel being processed.

2. An apparatus according to Claim 1 wherein said correctional factors are stored in logarithmic form.

3. An apparatus according to Claim 2 wherein said apparatus is further characterized by means for converting said corrected values back into a linear form.

4. An apparatus according to Claim 1 wherein the means for storing correctional factors can be changed depending on the nature of the image being scanned.

5. A method for compensating for two-dimensional non-uniformities in an optical system at each pixel location along a scan line, characterized by the following steps:

   establishing two-dimensional non-uniformity characteristics;

   characterizing the two-dimensional non-uniformity in terms of two orthogonal functions along first and second orthogonal axes;

   storing in a first memory the correctional factors associated with said first orthogonal axis;

   storing in a second memory the correctional factors associated with said second orthogonal axis;

   accessing said stored correctional factors in said first and second memories according to the coordinates of the pixel being processed; and

   combining the correctional factors obtained from said first and second memories to compensate for non-uniformities at that pixel location.

6. The method in Claim 5 wherein the address for said first memory is the X coordinate on the scan line of the pixel being corrected.

7. The method in Claim 5 wherein the address for said second memory is the Y coordinate which is the line count of the scan line containing the pixel being corrected.

## Patentansprüche

1. Vorrichtung zum Ausgleichen von zweidimensionalen Ungleichmäßigkeiten in einem optischen System an jedem Pixelort entlang einer Abtastzeile, gekennzeichnet durch

   - Mittel zum Erstellen von Mehrbit-Korrekturdaten durch Bestimmen der für die zweidimensionalen Ungleichmäßigkeiten typischen Merkmale im Sinne zweier Orthogonalfunktionen, die sich entlang zweier senkrecht zueinander verlaufenden Achsen erstrecken;

   - Mittel zum Speichern von Korrekturfaktoren für die erste orthogonale Achse;

   - Mittel zum Speichern von Korrekturfaktoren für die zweite orthogonale Achse;

   - Mittel für den Zugriff auf die gespeicherten Korrekturfaktoren entsprechend den Koordinaten der zu verarbeitenden Pixel; und

   - Mittel zum Verknüpfen der Korrekturfaktoren, um einen Korrekturwert für das zu verarbeitende Pixel zu erhalten.

2. Vorrichtung nach Anspruch 1, dadurch gekennzeichnet, daß die Korrekturfaktoren in logarithmischer Form gespeichert werden.

3. Vorrichtung nach Anspruch 2, gekennzeichnet durch Mittel zum Rückwandeln der Korrekturwerte in eine lineare Form.

4. Vorrichtung nach Anspruch 1, dadurch gekennzeichnet, daß die Mittel zum Speichern von Korrekturfaktoren je nach Art des abzutastenden Bildes veränderbar sind.

5. Verfahren zum Ausgleichen von zweidimensionalen Ungleichmäßigkeiten in einem optischen System an jedem Pixelort entlang einer Abtastzeile, gekennzeichnet durch folgende Schritte:

   - Erstellen der für die zweidimensionalen Ungleichmäßigkeiten typischen Merkmale;

   - Kennzeichnen der zweidimensionalen Ungleichmäßigkeiten im Sinne zweier Orthogonalfunktionen entlang einer ersten und einer zweiten Achse, die senkrecht zueinander verlaufen;

- Speichern der der ersten orthogonalen Achse zugeordneten Korrekturfaktoren in einem ersten Speicher;
- Speichern der der zweiten orthogonalen Achse zugeordneten Korrekturfaktoren in einem zweiten Speicher;
- Zugriff auf die im ersten und zweiten Speicher gespeicherten Korrekturfaktoren entsprechend den Koordinaten des zu verarbeitenden Pixels;
- Verknüpfen der aus dem ersten und zweiten Speicher erhaltenen Korrekturfaktoren zum Ausgleich der Ungleichmäßigkeiten jedes Pixelorts.

6. Verfahren nach Anspruch 5, dadurch gekennzeichnet, daß die Adresse für den ersten Speicher die X-Achse der Abtastzeile des zu korrigierenden Pixels ist.

7. Verfahren nach Anspruch 5, dadurch gekennzeichnet, daß die Adresse für den zweiten Speicher die Y-Achse ist, welche die Zeilenzahl der das zu korrigierende Pixel enthaltenden Abtastzeile darstellt.

**Revendications**

1. Appareil pour compenser des non uniformités bidimensionnelles dans un système optique à chaque emplacement de pixel suivant une ligne de balayage caractérisé par :

un moyen pour établir des données de correction à bits multiples en déterminant les caractéristiques de non uniformité bidirectionnelles en terme de deux fonctions orthogonales suivant deux axes orthogonaux ;

un moyen pour mémoriser les facteurs de correction pour une première fonction orthogonale ;

un moyen pour mémoriser les facteurs de correction pour une seconde fonction orthogonale ;

un moyen pour accéder auxdits facteurs de correction mémorisés selon les coordonnés du pixel qui doit être traité, et

un moyen pour combiner les facteurs de correction afin d'obtenir une valeur corrigée pour le pixel qui doit être traité.

2. Appareil selon la revendication 1, dans lequel lesdits facteurs de correction sont mémorisés sous forme logarithmique.

3. Appareil selon la revendication 2, dans lequel ledit appareil comprend un moyen pour reconvertir lesdites valeurs corrigées sous une forme linéaire.

4. Appareil selon la revendication 1, dans lequel les moyens pour mémoriser les facteurs de correction peuvent être modifiés en fonction de la nature de l'image qui doit être balayée.

5. Procédé pour compenser des non uniformités bidimensionnelles dans un système optique à chaque emplacement de pixel suivant une ligne de balayage, caractérisé par les étapes suivantes consistant à

établir les caractéristiques de non uniformité bidimensionnelle ;

caractériser la non uniformité bidimensionnelle en termes de deux fonctions orthogonales suivant des premier et second axes orthogonaux ; mémoriser dans une première mémoire les facteurs de correction associés au premier axe orthogonal ;

mémoriser dans une seconde mémoire les facteurs de correction associés au second axe orthogonal ;

accéder auxdits facteurs de correction mémorisés dans lesdites première et seconde mémoires conformément au coordonnés du pixel qui doit être traité, et

combiner les facteurs de correction obtenus à partir desdites première et seconde mémoires afin de compenser les non uniformités à cet emplacement pixel.

6. Procédé selon la revendication 5, dans lequel l'adresse de ladite première mémoire est la coordonnée X sur la ligne de balayage du pixel qui doit être corrigé.

7. Procédé selon la revendication 5, dans lequel l'adresse de ladite seconde mémoire est la coordonnée Y qui est le compte de lignes de la ligne de balayage contenant le pixel qui doit être corrigé.

FIG. 1

EP 0 474 762 B1

LOGARITHIC CONVERSION PROM
INPUT / OUTPUT RESPONSE

FIG. 2

EXPONENTIAL CONVERSION PROM
INPUT / OUTPUT RESPONSE

FIG. 3

FIG. 4

COMBINED ERROR EFFECT OF LOGARITHMIC
AND EXPONENTIAL CONVERSION PROCESSES

$ERROR = (2 * NAD - NLIN) / 2$

FIG. 5

LINEAR INPUT VALUE

EP 0 474 762 B1

FIG. 6

TIMING DIAGRAM

EP 0 474 762 B1

FIG. 7

EP 0 474 762 B1

FIG. 8

FIG. 9